# EUROPEAN PATENT APPLICATION

(11) **EP 2 664 563 A1**
(43) Date of publication of application: **20.11.2013**
(21) Application number: 12003852.6
(22) Date of filing: 16.05.2012
(51) Int. Cl.: B65G 23/22, H02K 7/10

(54) **Motor drive of a gearless belt conveyor drive system**

(71) Applicant: ABB Technology AG, 8050 Zürich (CH)
(72) Inventor: Rathmann, Boris, 03046 Cottbus (DE); Richter, Ulf, 03048 Cottbus (DE)
(74) Representative: Kock, Ina

(57) **Abstract**

A motor drive for a gearless belt conveyor drive system comprises a motor base frame (9), a torque arm (8) mounted on the motor base frame (9), a rotationally symmetrical stator (7, 14) of a synchronous motor being fixedly held by the torque arm (8) and a rotationally symmetrical rotor casing (4) containing permanent magnet elements (6) of the rotor of the synchronous motor. The rotor casing (4) is directly mountable on a front end of a cylindrical belt conveyor pulley (1) so that the permanent magnet elements (6) of the rotor are rotary around the stator (7) and so that the symmetry axis of the rotor casing (4) and the symmetry axis of the stator are aligned with each other and with the longitudinal axis (16) of the belt conveyor pulley (1). This motor drive belongs to a gearless belt conveyor drive system, which further comprises a cylindrical belt conveyor pulley (1) mounted so as to be rotary around its longitudinal axis (16), and at least one flange (3, 13) for fixedly connecting the belt conveyor pulley and the rotor casing (4) of the motor drive.

## Description

The invention relates to a motor drive for a gearless belt conveyor drive system as well as a gearless belt conveyor drive system comprising the motor drive.

In mining and other kinds of industry where large scale bulk material as well as pieces of goods need to be handled and transported over considerable distances, belt conveyor systems are used. In general, to set a conveyor belt into motion, a conveyor drive unit is required which drives a belt drive pulley. The conveyor drive unit most commonly contains an electrical motor drive which is connected to the belt drive pulley by using a reduction gear. An alternative concept is the use of a direct drive, i.e. of a slowly rotating electrical motor which is directly coupled to the drive pulley in a gearless fashion. Accordingly, a gearless belt conveyor drive system contains an electrical motor drive and a belt drive pulley which are in direct mechanical connection. Such a gearless belt conveyor drive system has the advantage that due to the elimination of the gear, less moving mechanical components are involved which increases the reliability and life time of the conveyor drive system and thereby reduces the maintenance costs.

Gearless belt conveyor drive systems have been known for some time. For example, Siemens introduced their first gearless belt conveyor drive system in the article by Schwulera, R., "Advanced Drive System Saves up to 20% Energy", in: Electric Energy Conference 1987: Adelaide, S. Aust.: An International Conference on Electric Machines and Drives; Proceedings. Barton, ACT: Institution of Engineers, Australia, 1987: 101-107. The conveyor drive system contains two synchronous motors, the rotors of which are directly flanged to each side of the pulley shaft of the drive pulley and where the stators are then mounted so that the rotor windings may rotate inside the stators.

Another concept for a gearless belt conveyor drive system is described in US 7,543,700 B2 and DE 10 2006 004 421 A1. There, the motor is a permanent magnet synchronous motor which is located inside a pulley body of the drive pulley, , also called a drum shell, where the pulley body rotates about an axis. The stator of the motor is fixed to the axis and the rotor with the permanent magnets is fixed on the inside to the pulley body so that it can rotate together with the drive pulley about the stator.

The arrangement of the motor inside the pulley body may lead to various technical problems, especially when used for a large scale belt conveyor system, for example an overland conveyor, where the power rate of one of the corresponding driving motors reaches up to 10 Megawatt. Firstly, the pulley body limits the physical size of the motor. Accordingly, the maximum available power density of the motor limits the maximum possible power rate of the motor. This maximum power rate lies at a maximum of not more than 5 Megawatt, which may not be sufficient to drive a large scale belt conveyor system. Secondly, the problem with reliably removing the heat from the pulley body needs to be observed, where this problem aggravates with increasing power density. As an alternative to increasing the power density, one might think of increasing the size of the pulley body. However, an enlarged pulley body may require the use of a different belt size and/or belt material which considerably increases the costs of the belt conveyor system. In addition, the complexity of the manufacturing processes increases with an increased size of the pulley body, while the manufacturing precision deteriorates, in particular with respect to the evenness and roundness of the cylindrical pulley body.

It is therefore the object of the present invention to suggest a concept for the motor drive of a gearless belt conveyor drive system where the above described problems are avoided.

This object is achieved by a motor drive and a gearless belt conveyor drive system containing the motor drive according to the main claims.

The motor drive for a gearless belt conveyor drive system according to the invention comprises a motor base frame, a torque arm mounted on the motor base frame, a rotationally symmetrical stator of a synchronous motor being fixedly held by the torque arm, a rotationally symmetrical rotor casing containing the permanent magnet elements of the rotor of the synchronous motor, where the rotor casing is directly mountable on a front end of a cylindrical belt conveyor pulley so that the elements of the rotor are rotary around the stator and so that the symmetry axis of the rotor casing and the symmetry axis of the stator are aligned with each other and with the longitudinal axis of the belt conveyor pulley.

Accordingly, the present invention is based on the idea to combine the two previously described concepts in such a way that the disadvantages are overcome. Therefore, the synchronous motor with permanent magnets is placed not inside the body of the belt conveyor pulley but is made to be mountable to one of its outer ends. This overcomes the above described problems with the limited motor power and with the removing of the motor heat. In contrast to the solution described by Schwulera, the rotor of the motor drive is not an inner but an outer rotor, i.e. it rotates around the stator. This concept allows for a design of the motor drive which is optimized with respect to the power rate, the electrical efficiency and the physical size and weight of the motor. The motor drive becomes lighter and slimmer, which means that it can be handled much more easily during installation, servicing and maintenance. In addition, the proposed concept for the motor drive results in an increased cost efficiency of the resulting gearless belt conveyor drive system, compared to the system with a standard synchronous motors with inner rotors, as cost savings can be achieved in other parts of the system than just the motor. Since due to the outer rotor concept the permanent magnets are subject to moderate temperatures of less than 120 degrees Celsius, no high-end permanent magnet material is required. Further advantages are that the rotor can be easily disassembled, for transporting for example, since no rotor windings and no electrical connectors are contained.

In a preferred embodiment of the motor drive, the motor base frame is arranged to be slidable alongside a rail from an operating position to a servicing position and to be fixed to a conveyor baseplate or a conveyor foundation platform in the operating position. According to this embodiment, the motor base frame, together with any element or part of the motor drive which is mounted to it, can be separated from the belt conveyor pulley in order for the synchronous motor and/or the pulley to be serviced. This is for example advantageous in connection with large scale belt conveyor systems which are used in underground mines, such as copper mines. The space in the tunnels of the mines is naturally limited, while the power rate and accordingly the size of the motor drive are comparatively large. When during servicing or maintenance access to the rotor casing is needed, the stator can be easily separated from it without requiring much space. Therefore, only the motor base frame together with the torque arm and the stator are slided to the servicing position and the servicing can be performed directly in the tunnel.

In a further development of the preferred embodiment, the rotor casing is arranged to be fixedly attached directly or indirectly to the motor base frame. According to this solution, the complete motor drive can be easily separated from the pulley, so that direct access to the pulley is given which could, for example, be exchanged without requiring much preparatory effort and without the need for first disassembling the motor.

In a further embodiment of the motor drive, the rotor casing is provided with cooling elements for convection cooling. This cooling principle together with the outer rotor concept results in a robust, simple and efficient cooling of the synchronous motor, which makes the overall motor design energy- and cost efficient. Alternatively, or in addition to the cooling elements, forced cooling means can be provided for applying forced cooling to the motor drive and its rotor casing. For example, a cooling fan may be installed in proximity to the motor drive for creating forced air convection.

The gearless belt conveyor drive system according to the invention comprises a motor drive as described above, a cylindrical belt conveyor pulley which is mounted so as to be rotary around its longitudinal axis and at least one flange for fixedly connecting the belt conveyor pulley and the rotor casing of the motor drive. Altogether, the gearless belt conveyor drive system contains a comparatively small number of elements and is constructed in a simple and modular way which is mechanically robust.

In an embodiment of the gearless belt conveyor drive system, the belt conveyor pulley is rotary mounted inside at least one ring bearing. Since the synchronous motor is directly attached to the pulley, the motor can be designed without any bearing. This results in the possibility for a reduced air gap, which leads to an increased power rate by maintaining the physical size of the motor. Further, no bearing in the synchronous motor means less wearing of the motor.

The invention and its further embodiments will become apparent from the examples described below in connection with the appended drawings which illustrate:
- Fig. 1: a first embodiment of the gearless belt conveyor drive system in an operating state,
- Fig. 2: a servicing state of the first embodiment,
- Fig. 3: a second embodiment of the gearless belt conveyor drive system.

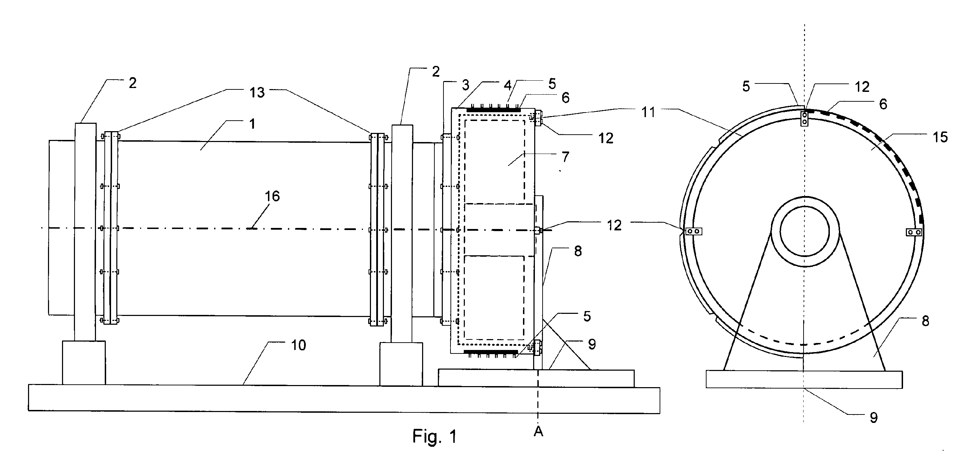

In Fig. 1, a first embodiment of a gearless belt conveyor drive system is depicted containing a cylindrical belt conveyor pulley 1 for driving a conveyor belt. The belt conveyor pulley 1 is mounted inside two ring bearings 2 so that it is rotary around its longitudinal axis 16. The belt conveyor pulley 1 contains two flanges 13 located on inner sides of the ring bearings 2, where the inner sides are the sides of flanges 13 which show towards the belt driving part of belt conveyor pulley 1. On an outer side of one of the ring bearings 2, belt conveyor pulley 1 ends in a further flange 3, which used for fixedly connecting a rotor casing 4 to the further flange 3 and thereby to the belt conveyor pulley 1.

The rotor casing 4 contains permanent magnet elements 6, which basically form a rotationally symmetrical rotor of a synchronous motor. On the outside of the rotor casing 4, cooling elements 5 are attached to the casing for convection cooling. The permanent magnet elements 6 of the rotor are arranged to be rotary around a rotationally symmetrical stator 7, where the symmetry axis of the rotor casing 4 and the symmetry axis of the stator 7 are aligned with each other and with the longitudinal axis 16 of the belt conveyor pulley 1.

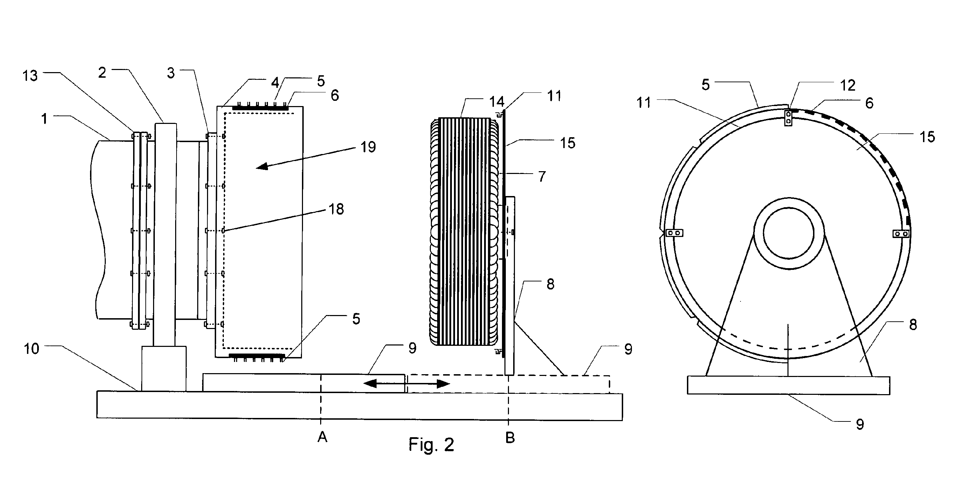

The stator 7 is fixedly held by a torque arm 8, and the torque arm 8 is mounted on a motor base frame 9. The motor base frame 9 is arranged to be slidable alongside a rail from an operating position A to a servicing position B (see Fig. 2) and vice versa and to be fixed in the operating position A to a conveyor baseplate or a conveyor foundation platform 10. In cases where the conveyor baseplate or foundation platform is made of concrete, the gearless belt conveyor drive system belongs to a permanent installation. But the conveyor baseplate or foundation platform may also be designed for the gearless belt conveyor drive system to be a mobile conveyor drive system which can be relocated.

As can be seen in Fig. 2, by sliding the motor base frame 9 to servicing position B, the stator 7 is moved as well, together with the torque arm 8. Rotor casing 4 has an open front end showing away from the belt conveyor pulley 1. In the operating position A, the stator 7 is placed such it extends through the open front end into the rotor casing 4. When being slided into the servicing position B, the stator 7 is moved out of the rotor casing 4 through the open front end. In Fig. 2, a cover plate 15 is shown, which in the operating position A covers the open front end of rotor casing 4. This cover plate 15 is fixed to torque arm 8 as well. A circular labyrinth seal 11 is arranged concentrically at and attached to the cover plate 15. In operating position A, the labyrinth seal 11 seals the inner room 19 of the rotor casing 4 against dust and/or humidity.

In servicing position B, the various elements of the rotor and stator of the synchronous motor can be easily reached. In case that the belt conveyor pulley 1 requires maintenance, rotor casing 4 can be detached from the belt conveyor pulley 1 by unfastening the bolted connections 18 which extend through the further flange 3. This situation may for example be applicable when the gearless belt conveyor drive system is used outside of mining tunnels, for example between the mine and a bulk storage depot, since no space restrictions need to be observed.

Another possibility for easily reaching the belt conveyor pulley 1 during servicing, and in particular within a limited space, such as in a mining tunnel, is to fixedly attaching rotor casing 4 to motor base frame 9. This is achieved by using at least one bolted connection 12 for mounting rotor casing 4 to the cover plate 15 and/or to the torque arm 8, as is indicated in Fig. 1. Of course, bolted connections 18 need to be removed as well. In that case, rotor and stator can be moved together to servicing position B and belt conveyor pulley 1 becomes directly accessible.

In Figs. 1 and 2, the belt conveyor pulley is a hollow cylinder comprising two cylinder bearing sections, each placed inside one of the ring bearings 2. One of the two cylinder bearing sections ends directly in the outer flanges 13 and 3. Accordingly, the cylinder body takes over two mechanical tasks: the one of driving the conveyor belt and the one of transmitting the driving torque of the synchronous motor. In general, it is advantageous to use a hollow cylinder for the belt conveyor pulley since it has an increased stiffness with respect to belt tensile forces. As a result, the belt conveyor pulley bends less compared to a standard shaft. This reduces the overall distortions in the conveyor drive system and helps to keep the air gap in the synchronous motor at a constant level, even allowing for a further reduction of the air gap.

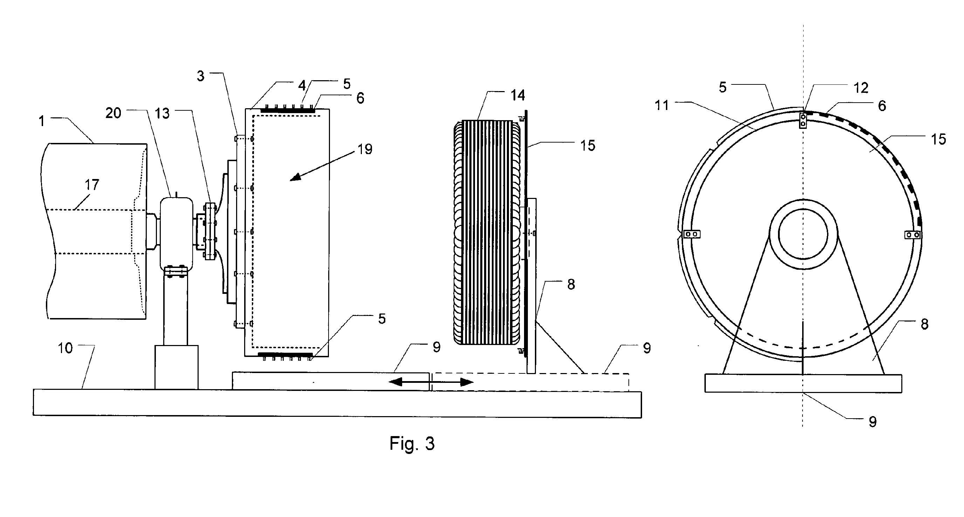

In Fig. 3, a second embodiment of a gearless belt conveyor drive system is shown, which differs from the system of Figs. 1 and 2 in that the belt conveyor pulley contains a shaft 17, one end of which is connected to the flanges 13 and 3 to which the rotor casing 4 is attached. In this embodiment, driving torque of the synchronous motor is transmitted through the shaft, while the cylinder body of belt conveyor pulley 1 solely drives the conveyor belt. A further difference is that both flanges 13 and 3 are located on the outer side of a roller or antifriction bearing 20.

## Claims

1. Motor drive for a gearless belt conveyor drive system comprising
● a motor base frame (9),
● a torque arm (8) mounted on the motor base frame (9),
● a rotationally symmetrical stator (7, 14) of a synchronous motor being fixedly held by the torque arm (8),
● a rotationally symmetrical rotor casing (4) containing permanent magnet elements (6) of the rotor of the synchronous motor, where the rotor casing (4) is directly mountable on a front end of a cylindrical belt conveyor pulley (1) so that the permanent magnet elements (6) of the rotor are rotary around the stator (7) and so that the symmetry axis of the rotor casing (4) and the symmetry axis of the stator are aligned with each other and with the longitudinal axis (16) of the belt conveyor pulley (1).

2. Motor drive according to claim 1, where the motor base frame (9) is arranged to be slidable alongside a rail from an operating position (A) to a servicing position (B) and to be fixed to a conveyor baseplate or a conveyor foundation platform (10) in the operating position (A).

3. Motor drive according to any of claims 1 or 2, where the rotor casing (4) is arranged to be fixedly attached directly or indirectly to the motor base frame (9).

4. Motor drive according to any of the previous claims, where the rotor casing (4) has an open front end, where the open front end shows away from the belt conveyor pulley (1) and where the rotor casing (4) is mounted so that the stator (7) extends through the open front end into the rotor casing (4).

5. Motor drive according to claim 4, where a cover plate (15) covers the open front end of the rotor casing (4) and where a labyrinth seal (11) is located at and attached to the cover plate (15) for sealing an inner room (19) of the rotor casing (4) against dust and/or humidity.

6. Motor drive according to claims 3 and 5, where the rotor casing (4) is arranged to be fixedly attached to the motor base frame (9) by using at least one bolted connection (12) to attach the rotor casing (4) to the cover plate (15) and/or to the torque arm (8).

7. Motor drive according to any of the previous claims, where the front end of the rotor casing (4) which is directly mountable to the belt conveyor pulley (1) is arranged in the form of a flange end.

8. Motor drive according to any of the previous claims, where the rotor casing (4) is provided with cooling elements (5) for convection cooling and/or is arranged to be cooled by forced cooling means.

9. Gearless belt conveyor drive system comprising
● a motor drive according to any of claims 1 to 8,
● a cylindrical belt conveyor pulley (1) which is mounted so as to be rotary around its longitudinal axis (16),
● at least one flange (3, 13) for fixedly connecting the belt conveyor pulley and the rotor casing (4) of the motor drive.

10. Gearless belt conveyor drive system according to claim 9, where the belt conveyor pulley (1) is rotary mounted inside at least one ring bearing (2).

11. Gearless belt conveyor drive system according to any of claims 9 or 10, where the belt conveyor pulley (1) is a hollow cylinder, the cylinder body of which directly ends in the at least one flange (13).

12. Gearless belt conveyor drive system according to any of claims 9 or 10, where the belt conveyor pulley (1) contains a shaft (17), one end of which is connected to the at least one flange (13).
